(19) Europäisches Patentamt
European Patent Office
Office européen des brevets

(11) EP 4 431 544 A1

# (12) EUROPEAN PATENT APPLICATION

published in accordance with Art. 153(4) EPC

(43) Date of publication:
**18.09.2024 Bulletin 2024/38**

(21) Application number: **22892838.8**

(22) Date of filing: **10.11.2022**

(51) International Patent Classification (IPC):
***C08G 64/02*** *(2006.01)* ***C08L 69/00*** *(2006.01)*
***G02B 1/04*** *(2006.01)*

(52) Cooperative Patent Classification (CPC):
**C08G 64/02; C08L 69/00; G02B 1/04**

(86) International application number:
**PCT/JP2022/041831**

(87) International publication number:
**WO 2023/085340 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 JP 2021184823**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
  **Tokyo 100-8324 (JP)**
- **NISHIMORI Katsushi**
  **Tokyo 125-8601 (JP)**
- **MOTEGI Atsushi**
  **Tokyo 125-8601 (JP)**
- **ISHIHARA Kentaro**
  **Tokyo 100-8324 (JP)**
- **HARADA Yutaro**
  **Tokyo 125-8601 (JP)**
- **FUKUI Kiyoshiro**
  **Tokyo 125-8601 (JP)**

(74) Representative: **Hoffmann Eitle**
**Patent- und Rechtsanwälte PartmbB**
**Arabellastraße 30**
**81925 München (DE)**

## (54) POLYCARBONATE RESIN, AND OPTICAL LENS AND OPTICAL FILM USING SAME

(57) The present invention can provide a polycarbonate resin comprising: a constituent unit (a) given by general formula (1-1A); a constituent unit (b) given by general formula (1-1 A), but different from the constituent unit (a); a constituent unit (c-1) given by general formula (1-2A) or a constituent unit (c-2) given by general formula (3-1); and a constituent unit (d) given by general formula (2), wherein the content of the constituent unit (a) is 1-50 mol%, the content of the constituent unit (b) is 1-70 mol%, the content of the constituent unit (c-1) or (c-2) is 1-50 mol%, and the content of the constituent unit (d) is 1-30 mol%, in each case with reference to the total amount of the constituent units (a) to (d).

EP 4 431 544 A1

## Description

TECHNICAL FIELD

The present invention relates to a polycarbonate resin, and an optical lens and an optical film which are obtained by using the same. Specifically, the present invention relates to a polycarbonate resin, which comprises a structural unit having a specific binaphthyl skeleton and has excellent optical characteristics and improved resin flowability, and an optical lens and an optical film which are obtained by using the same.

BACKGROUND ART

Optical lenses are used not only in spectacles but also in various fields including optical systems of various cameras such as cameras, film integrated type cameras and video cameras. Examples of physical properties important for the lens materials include a refractive index (nD) and an Abbe number (ν). Regarding the optical design of optical units, when using a material having a high refractive index, since a lens element can be realized with a surface having a smaller curvature, the amount of aberration generated on this surface can be reduced, and reduction in size and weight of a lens system can be realized by reduction in the number of lenses, reduction in the eccentricity sensitivity of the lens and reduction in the thickness of the lens, and therefore it is advantageous.

Further, regarding the optical design of optical units, it is known that chromatic aberration is corrected by combined use of a plurality of lenses with different Abbe numbers. For example, chromatic aberration is corrected by combined use of a lens made of an alicyclic polyolefin resin having an Abbe number (ν) of 45 to 60 and a lens made of a polycarbonate resin consisting of bisphenol A having a low Abbe number (nD=1.586, ν=30).

As lens materials, optical glasses and optical transparent resins are widely used. Optical transparent resins have the advantages that aspherical lenses can be produced and mass production can be realized by means of injection molding. Injection molding is a method in which a plastic is heated to be softened and pushed into a mold with the injection pressure being applied, forming is carried out by filling the mold with the plastic, and the resin is cooled and then taken out from the mold to produce a molded body.

The higher the temperature for softening the resin is, the more the flowability of the resin is improved, but since decomposition and coloring of the resin tend to occur, there is a limitation on the temperature for softening. Further, the mold temperature is held constant in many molding machines, but since pressurized water is used for a heat medium of a widely used mold temperature controller, the upper limit of the mold temperature is about 150°C. As a result, when using this apparatus to produce a product having high surface accuracy, the upper limit of the glass transition temperature of the resin that can be used is limited to about 160°C.

The polycarbonate resin made of bisphenol A is widely used for optical lenses, but it has been desired to further improve the refractive index because of expanded uses of optical lenses. Further, applications of the polycarbonate resin made of bisphenol A are limited because of high birefringence thereof as a drawback. For this reason, extensive efforts have been made to develop resins for optical lenses having both a high refractive index and low birefringence.

In order to improve physical properties of a bisphenol A-type polycarbonate resin, it is copolymerized with another type of polycarbonate resin. Patent Document 1 discloses that the refractive index of a copolymer with a structural unit represented by formula (a) is particularly improved.

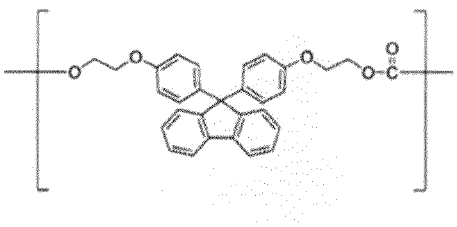
(a)

Further, Patent Document 2 discloses a copolymer of bisphenol A and a polycarbonate resin comprising a structural unit having a fluorene structure.

Moreover, as a material having a high refractive index, Patent Document 3 discloses a copolymer in which a bisphenol A-type polycarbonate or aromatic polycarbonate resin is substituted with formula (b). However, the document describes that this resin composition has a glass transition temperature of higher than 160°C though a higher refractive index is obtained.

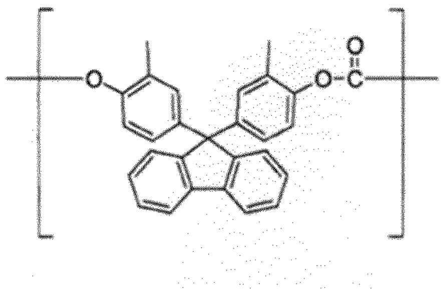

(b)

Furthermore, polymers having a 1,1'-binaphthalene structure are described in Patent Documents 4 to 6. Specifically, Patent Documents 4 to 6 disclose polycarbonate resins having a 1,1'-binaphthalene structure. However, a polycarbonate resin having flowability suitable for precision molding has been still desired.

PRIOR ART DOCUMENTS

PATENT DOCUMENTS

Patent Document 1: WO2007/142149
Patent Document 2: Japanese Laid-Open Patent Publication No. H6-25398
Patent Document 3: Japanese Laid-Open Patent Publication No. 2010-132782
Patent Document 4: Japanese Laid-Open Patent Publication No. 2000-302857
Patent Document 5: Japanese Laid-Open Patent Publication No. 2000-302858
Patent Document 6: Japanese National-phase PCT Laid-Open Patent Publication No. 2015-166951

SUMMARY OF THE INVENTION

PROBLEMS TO BE SOLVED BY THE INVENTION

The present invention addresses the problem of providing a polycarbonate resin which has flowability suitable for molding while maintaining physical properties preferred as an optical material. The present invention also addresses the problem of providing an optical lens and an optical film which are obtained by using the polycarbonate resin.

MEANS FOR SOLVING THE PROBLEMS

The present inventors diligently made researches in order to solve the above-described problems and found that the problems can be solved by a polycarbonate resin comprising structural units (a) to (d) which will be described later, and thus the present invention was achieved. Specifically, the present invention is as described below.

<1> A polycarbonate resin comprising: a structural unit (a) represented by general formula (1-1A); a structural unit (b) represented by general formula (1-1A), but different from the structural unit (a); a structural unit (c-1) represented by general formula (1-2A) or a structural unit (c-2) represented by general formula (3-1); and a structural unit (d) represented by general formula (2),

wherein the content of the structural unit (a) is 1 to 50 mol%, the content of the structural unit (b) is 1 to 70 mol%, the content of the structural unit (c-1) or (c-2) is 1 to 50 mol%, and the content of the structural unit (d) is 1 to 30 mol%, in each case with reference to the total amount of the structural units (a) to (d):

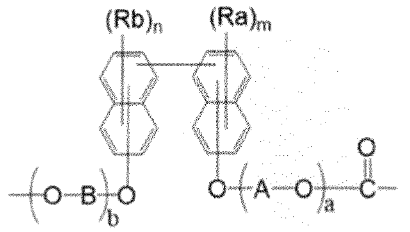

(1-1A)

wherein in formula (1-1A):

$R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;

$R_h$ represents an aryl group having 6 to 20 carbon atoms, or a heteroaryl group having 6 to 20 carbon atoms which contains at least one heterocyclic atom selected from O, N and S;

A and B each independently represent an alkylene group having 1 to 4 carbon atoms;

m and n each independently represent an integer of 1 to 6; and

a and b each independently represent an integer of 0 to 10,

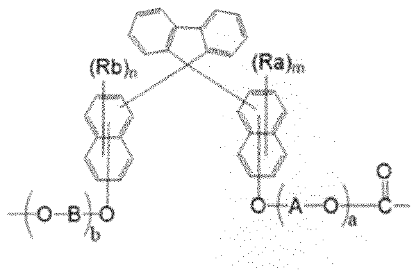

(1-2A)

wherein in formula (1-2A):

$R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;

$R_h$ represents an aryl group having 6 to 20 carbon atoms, or a heteroaryl group having 6 to 20 carbon atoms which contains at least one heterocyclic atom selected from O, N and S;

A and B each independently represent an alkylene group having 1 to 4 carbon atoms;

m and n each independently represent an integer of 1 to 6; and

a and b each independently represent an integer of 0 to 10,

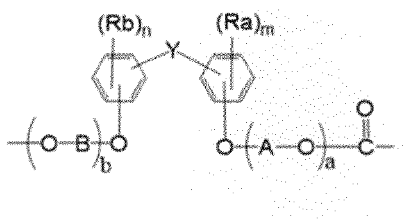

(3-1)

wherein in formula (3-1):

$R_a$ and $R_b$ are each independently selected from hydrogen, a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, and an aryl group having 6 to 20 carbon atoms;

Y represents a fluorene group;

A and B each independently represent an alkylene group having 1 to 4 carbon atoms;

m and n each independently represent an integer of 0 to 4; and

a and b each independently represent an integer of 1 to 10,

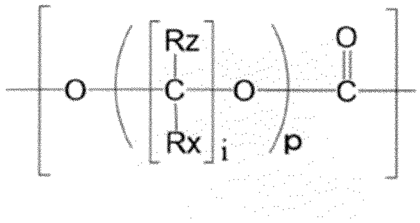

(2)

wherein in formula (2): $R_z$ and $R_x$ each independently represent a hydrogen atom or an alkyl group having 1 to 3 carbon atoms; i represents an integer of 2 to 16; and p represents an integer of 1 to 600.

<2> The polycarbonate resin according to item <1>, wherein the structural unit (a) is a structural unit derived from 2DNBINOL-2EO (6,6'-di-(2-naphthyl)-2,2'-bis-(2-hydroxyethoxy)-1,1'-binaphthyl) represented by a structural formula below; the structural unit (b) is a structural unit derived from DPBHBNA (6,6'-diphenyl-2,2'-bis-(2-hydroxyethoxy)-1,1'-binaphthyl) represented by a structural formula below; the structural unit (c-1) is a structural unit derived from BNEF (9,9-bis[6-(2-hydroxyethoxy)-2-naphthyl]fluorene) represented by a structural formula below; the structural unit (c-2) is a structural unit derived from BPPEF (9,9-bis[4-(2-hydroxyethoxy)-3-phenylphenyl]fluorene) represented by a structural formula below; and the structural unit (d) is a structural unit derived from a compound selected from the group consisting of diethylene glycol, 1,5-pentanediol, 1,6-hexanediol, 1,7-heptanediol, 1,8-octanediol, 1,10-decanediol, and 1,12-dodecanediol:

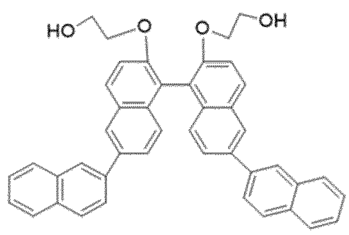

2DNBINOL-2EO

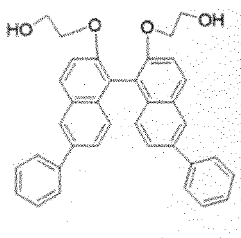

DPBHBNA

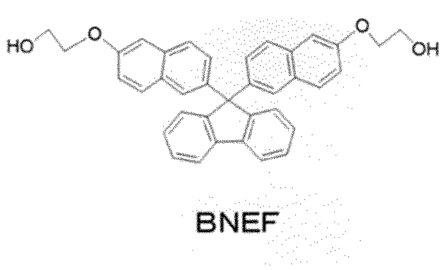

BNEF

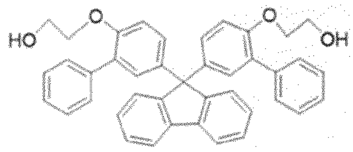

BPPEF

<3> The polycarbonate resin according to item <1> or <2>, which contains an antioxidant and a catalyst deactivator.
<4> The polycarbonate resin according to item <3>, wherein the antioxidant is pentaerythritol-tetrakis[3-(3,5-di-tert-butyl-4-hydroxyphenyl)propionate] and 3,9-bis(2,6-di-tert-butyl-4-methylphenoxy)-2,4,8, 10-tetraoxa-3,9-diphosphaspiro[5.5]undecane; and the catalyst deactivator is dodecylbenzenesulfonic acid tetrabutylphosphonium salt.
<5> The polycarbonate resin according to any one of items <1> to <4>, which has a refractive index (nD) of 1.685 to 1.800.
<6> The polycarbonate resin according to any one of items <1> to <5>, which has an Abbe number (v) of 14.0 to 18.0.
<7> The polycarbonate resin according to any one of items <1> to <6>, which has a glass transition temperature of 130 to 160°C.
<8> The polycarbonate resin according to any one of items <1> to <7>, which has a melt volume-flow rate (MVR) of 30 to 100 $cm^3/10$ min.
<9> The polycarbonate resin according to any one of items <1> to <8>, which has a water absorption rate of less than 0.11%.
<10> An optical lens comprising the polycarbonate resin according to any one of items <1> to <9>.
<11> An optical film comprising the polycarbonate resin according to any one of items <1> to <9>.

## ADVANTAGEOUS EFFECT OF THE INVENTION

According to the present invention, it is possible to obtain a polycarbonate resin, which has a high refractive index and a low Abbe number, and which has flowability suitable for molding while maintaining physical properties preferred as an optical material. Further, according to the present invention, it is possible to carry out precision molding of an optical lens and an optical film using this resin.

## EMBODIMENTS FOR CARRYING OUT THE INVENTION

### (Polycarbonate Resin)

The polycarbonate resin of the present invention comprises: a structural unit (a) represented by general formula (1-1A); a structural unit (b) represented by general formula (1-1A), but different from the structural unit (a); a structural unit (c-1) represented by general formula (1-2A) or a structural unit (c-2) represented by general formula (3-1); and a structural unit (d) represented by general formula (2).

<Structural Unit (a) and Structural Unit (b)>

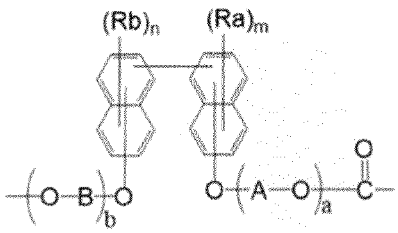

(1－1A)

In formula (1-1A):

$R_a$ and $R_b$ are each independently selected from a halogen atom; an alkyl group having 1 to 20 carbon atoms; an

alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and -C≡C-$R_h$;

$R_h$ represents an aryl group having 6 to 20 carbon atoms, or a heteroaryl group having 6 to 20 carbon atoms which contains at least one heterocyclic atom selected from O, N and S;

A and B each independently represent an alkylene group having 1 to 4 carbon atoms;

m and n each independently represent an integer of 1 to 6; and

a and b each independently represent an integer of 0 to 10.

In a preferred embodiment of the present invention, in formula (1-1A), $R_a$ and $R_b$ are each independently selected from an aryl group having 6 to 20 carbon atoms; a heteroaryl group having 6 to 20 carbon atoms or an aryloxy group having 6 to 20 carbon atoms, which contains at least one heterocyclic atom selected from O, N and S; and - C≡C-$R_h$, and $R_h$ represents an aryl group having 6 to 20 carbon atoms, or a heteroaryl group having 6 to 20 carbon atoms which contains at least one heterocyclic atom selected from O, N and S.

The aryl group more preferably has 6 to 18 carbon atoms, even more preferably has 6 to 14 carbon atoms, and particularly preferably has 6 to 10 carbon atoms.

The heteroaryl group more preferably has 6 to 18 carbon atoms, even more preferably has 8 to 16 carbon atoms, and particularly preferably has 10 to 14 carbon atoms.

The aryloxy group more preferably has 6 to 18 carbon atoms, even more preferably has 6 to 16 carbon atoms, and particularly preferably has 6 to 14 carbon atoms.

Further, in a preferred embodiment of the present invention, in formula (1-1A), $R_a$ and $R_b$ may be each independently selected from a phenyl group, a naphthyl group, or the group consisting of the following:

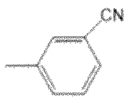, 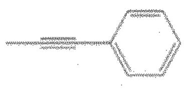, 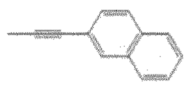, 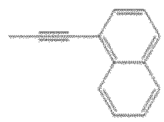

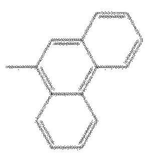, 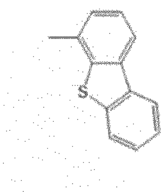, 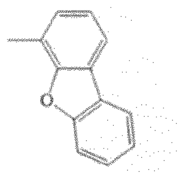

In the present invention, particularly preferably, the structural unit (a) is a structural unit derived from 2DNBINOL-2EO (6,6'-di-(2-naphthyl)-2,2'-bis-(2-hydroxyethoxy)-1,1'-binaphthyl) represented by a structural formula below, and the structural unit (b) is a structural unit derived from DPBHBNA (6,6'-diphenyl-2,2'-bis-(2-hydroxyethoxy)-1,1'-binaphthyl) represented by a structural formula below:

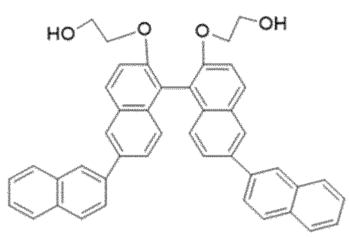

2DNBINOL-2EO

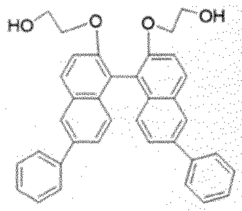

DPBHBNA

<Structural Unit (c-1)>

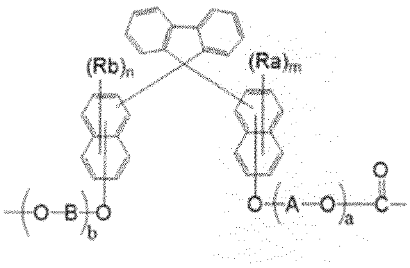

(1-2A)

In formula (1-2A):

$R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10.

In a preferred embodiment of the present invention, in formula (1-2A), $R_a$ and $R_b$ are each independently selected from an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$, and $R_h$ represents an aryl group having 6 to 20 carbon atoms, or a heteroaryl group having 6 to 20 carbon atoms which contains at least one heterocyclic atom selected from O, N and S.

The aryl group more preferably has 6 to 18 carbon atoms, even more preferably has 6 to 14 carbon atoms, and particularly preferably has 6 to 10 carbon atoms.

The heteroaryl group more preferably has 6 to 18 carbon atoms, even more preferably has 8 to 16 carbon atoms, and particularly preferably has 10 to 14 carbon atoms.

The aryloxy group more preferably has 6 to 18 carbon atoms, even more preferably has 6 to 16 carbon atoms, and particularly preferably has 6 to 14 carbon atoms.

Further, in a preferred embodiment of the present invention, in formula (1-2A), $R_a$ and $R_b$ may be each independently selected from a hydrogen atom, a phenyl group, a naphthyl group, or the group consisting of the following:

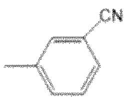 、 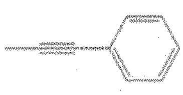 、 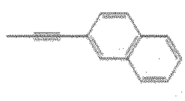 、 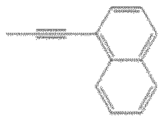

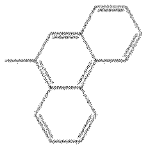 , 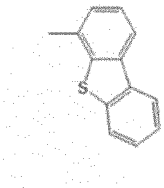 , 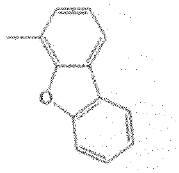

In the present invention, the structural unit (c-1) is particularly preferably a structural unit derived from BNEF (9,9-bis[6-(2-hydroxyethoxy)-2-naphthyl]fluorene) represented by a structural formula below:

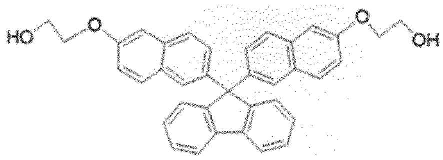

BNEF

<Structural Unit (c-2)>

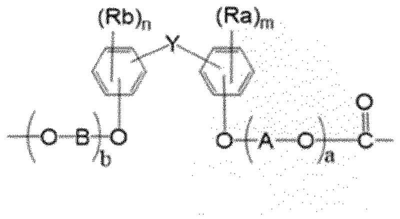 (3−1)

In formula (3-1):

$R_a$ and $R_b$ are each independently selected from hydrogen, a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, and an aryl group having 6 to 20 carbon atoms;
Y represents a fluorene group;
A and B each independently represent an alkylene group having 1 to 4 carbon atoms;
m and n each independently represent an integer of 0 to 4; and
a and b each independently represent an integer of 1 to 10.

In the present invention, the structural unit (c-2) is particularly preferably a structural unit derived from BPPEF (9,9-bis[4-(2-hydroxyethoxy)-3-phenylphenyl]fluorene) represented by a structural formula below:

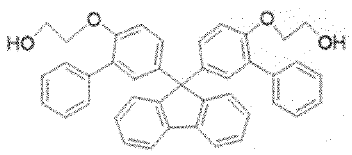

BPPEF

<Structural Unit (d)>

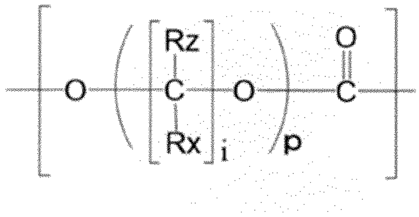

(2)

In formula (2): $R_z$ and $R_x$ each independently represent a hydrogen atom or an alkyl group having 1 to 3 carbon atoms; i represents an integer of 2 to 16; and p represents an integer of 1 to 600.
In a preferred embodiment of the present invention, in formula (2), i is an integer of 2 to 14, 2 to 12, 2 to 10, 2 to 8, 2 to 6, 2 to 4, 4 to 16, 4 to 14, 4 to 12, 4 to 10, 4 to 8, 4 to 6, 6 to 16, 6 to 14, 6 to 12, 6 to 10, or 6 to 8, and p is an integer of 1 to 500, 1 to 400, 1 to 300, 1 to 200, 1 to 100, 1 to 50, 1 to 40, 1 to 30, 1 to 20, 1 to 15, 1 to 10, 1 to 8, 1 to 6, 1 to 4, 1 to 3, or 2 to 3.
Further, preferred examples of aliphatic dihydroxy compounds related to the structural unit (d) represented by formula (2) include ethylene glycol, diethylene glycol, triethylene glycol, 1,3-propanediol, 1,2-propanediol, 1,4-butanediol, 1,3-butanediol, 1,2-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and poly-n-propylene glycol. Preferred examples of poly-n-propylene glycol include polyethylene glycol, polytrimethylene glycol, polytetramethylene glycol, polypentamethylene glycol, and polyhexamethylene glycol. Further, examples of commercially available products of polytrimethylene glycol include "VELVETOL" (trade name) manufactured by Allessa.
In the present invention, the structural unit (d) is more preferably a structural unit derived from a compound selected from the group consisting of diethylene glycol, 1,5-pentanediol, 1,6-hexanediol, 1,7-heptanediol, 1,8-octanediol, 1,10-decanediol, and 1,12-dodecanediol, and particularly preferably a structural unit derived from 1,12-dodecanediol.
In the polycarbonate resin of the present invention, the content of the structural unit (a) is 1 to 50 mol%, preferably 1 to 40 mol%, more preferably 2 to 35 mol%, and particularly preferably 30 to 34 mol% relative to the total amount of the structural units (a) to (d). The content of the structural unit (b) is 1 to 70 mol%, preferably 10 to 60 mol%, more preferably 20 to 60 mol%, and particularly preferably 30 to 36 mol% relative to the total amount of the structural units (a) to (d). The content of the structural unit (c-1) or (c-2) is 1 to 50 mol%, preferably 5 to 40 mol%, more preferably 15 to 30 mol%, and particularly preferably 20 to 26 mol% relative to the total amount of the structural units (a) to (d). The content of the structural unit (d) is 1 to 30 mol%, preferably 5 to 20 mol%, and more preferably 10 to 15 mol% relative to the total amount of the structural units (a) to (d).
The polystyrene equivalent average molecular weight (Mw) of the polycarbonate resin is preferably 1,000 to 100,000, more preferably 5,000 to 80,000, even more preferably 10,000 to 80,000, and particularly preferably 10,000 to 70,000. When Mw is larger than the above-described lower limit, the strength of the resin can be maintained. Further, when Mw is smaller than the above-described upper limit, it is possible to prevent the melt viscosity from becoming excessively high, and therefore the resin after the production can be easily taken out, and in addition, the resin has good flowability and can be easily handled in a molten state.

(Method for Producing Polycarbonate Resin)

The method for producing the polycarbonate resin is not particularly limited. For example, it can be produced by the melt polycondensation method using dihydroxy compounds constituting the structural units (a) to (d) in the presence of a carbonic acid diester and a catalyst. As the catalyst, a basic compound catalyst or a transesterification catalyst or a mixed catalyst made of both of them can be used.
The polycarbonate resin of the present invention may comprise a structural unit derived from another dihydroxy compound other than the dihydroxy compounds constituting the structural units (a) to (d). Examples of the above-described another dihydroxy compound include:

an alicyclic dihydroxy compound such as 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbomanedimethanol, 2,5-norbornanedimethanol, 1,3-adamantanedimethanol, 1,4:3,6-dianhydrosorbitol, and 3,9-bis(1,1-dimethyl-2-dihydroxyethyl)-2,4,8,10-tetraoxaspiro-(5,5)-undecane; and

an aromatic dihydroxy compound such as 2,2'-bis(2-hydroxyethoxy)-1,1'-binaphthalene, 2,2-bis(4-hydroxyphenyl)propane [=bisphenol A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxy-diphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl)sulfone, 2,4'-dihydroxydiphenylsulfone, bis(4-hydroxyphenyl)sulfide, 4,4'-dihydroxydiphenylether, 4,4'-dihydroxy-3,3'-dichlorodiphenylether, 9,9-bis(4-hydroxyphenyl)fluorene, and 9,9-bis(4-hydroxy-2-methylphenyl)fluorene.

In this regard, the amount of the above-described another dihydroxy compound is desirably 20 mol% or less, and more desirably 10 mol% or less relative to 100 mol% of the dihydroxy compounds constituting the structural units (a) to (d). When the amount is within the above-described range, a high refractive index can be retained.

Examples of the carbonic acid diester include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among them, diphenyl carbonate is particularly preferred. Diphenyl carbonate is used at a ratio of preferably 0.90 to 1.15 mol, more preferably 0.95 to 1.10 mol, and even more preferably 1.00 to 1.10 mol relative to 1 mol of the dihydroxy compound.

Examples of the basic compound catalyst particularly include an alkali metal compound and/or an alkaline earth metal compound and a nitrogen-containing compound.

Examples of the alkali metal compound include an organic salt, inorganic salt, oxide, hydroxide, hydride or alkoxide of an alkali metal, etc. Specific examples thereof include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylboron, sodium benzoate, potassium benzoate, cesium benzoate, lithium benzoate, disodium hydrogen phosphate, dipotassium hydrogen phosphate, dilithium hydrogen phosphate, disodium phenyl phosphate, a disodium salt, dipotassium salt, dicesium salt or dilithium salt of bisphenol A, and a sodium salt, potassium salt, cesium salt or lithium salt of phenol. Among them, sodium hydrogen carbonate is preferred.

Examples of the alkaline earth metal compound include an organic salt, inorganic salt, oxide, hydroxide, hydride or alkoxide of an alkaline earth metal compound, etc. Specific examples thereof include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

Examples of the nitrogen-containing compound include quaternary ammonium hydroxides and salts thereof, and amines. Specific examples thereof include: quaternary ammonium hydroxides having an alkyl group, aryl group or the like such as tetramethylammonium hydroxide, tetraethylammonium hydroxide, tetrapropylammonium hydroxide, tetrabutylammonium hydroxide and trimethylbenzylammonium hydroxide; tertiary amines such as triethylamine, dimethylbenzylamine and triphenylamine; secondary amines such as diethylamine and dibutylamine; primary amines such as propylamine and butylamine; imidazoles such as 2-methylimidazole, 2-phenylimidazole and benzimidazole; and bases or basic salts such as ammonia, tetramethylammonium borohydride, tetrabutylammonium borohydride, tetrabutylammonium tetraphenylborate and tetraphenylammonium tetraphenylborate.

As the transesterification catalyst, salts of zinc, tin, zirconium or lead are preferably used. These substances may be used solely, or two or more of them may be used in combination. Specific examples thereof include zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonato, zirconium oxyacetate, zirconium tetrabutoxide, lead(II) acetate, and lead(IV) acetate. These catalysts are used at a ratio of $1 \times 10^{-9}$ to $1 \times 10^{-3}$ mol, and preferably $1 \times 10^{-7}$ to $1 \times 10^{-4}$ mol relative to 1 mol of the sum of the dihydroxy compounds.

In the melt polycondensation method, using the aforementioned raw materials and catalyst, melt polycondensation is carried out while removing a by-product by means of the transesterification reaction under heating conditions and under ordinary pressure or reduced pressure. The reaction is generally performed with two or more stages.

In the case of melt polycondensation in this composition system, after the dihydroxy compounds constituting the structural units (a) to (d) and the carbonic acid diester are melted in a reactor, the reaction may be performed with a monohydroxy compound by-produced being retained, but not distilled away. In this case, in the state where the monohydroxy compound by-produced is retained, but not distilled away, the reaction time is 20 minutes to 240 minutes, preferably 40 minutes to 180 minutes, and particularly preferably 60 minutes to 150 minutes. In this regard, when the monohydroxy compound by-produced is distilled away immediately after it is produced, the content of a high-molecular-weight body in the polycarbonate resin finally obtained is decreased. The above-described reaction time is just an example, and preferred reaction time may vary depending on a reaction scale.

Such a reaction may be either a continuous type or a batch type. The reaction apparatus to be used may be a vertical apparatus equipped with an anchor type stirring blade, maxblend stirring blade, helicalribbon type stirring blade or the like, or a horizontal apparatus equipped with a paddle blade, lattice blade, spectacle-shaped blade or the like, or an extruder-type apparatus equipped with a screw. Further, these apparatuses may be suitably used in combination in

consideration of the viscosity of a polymerized product.

In the method for producing the polycarbonate resin, the catalyst is preferably used without deactivation. However, according to need, after the polymerization reaction is completed, in order to maintain thermal stability and hydrolytic stability, the catalyst may be removed or deactivated. When the catalyst is deactivated, a method for deactivating a catalyst by means of addition of a publicly-known acidic substance can be suitably carried out. As the acidic substance, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used. Among them, butyl p-toluenesulfonate is more preferred. These deactivating agents are used in an amount of 0.01 to 50 times, and preferably 0.3 to 20 times the molar quantity of the catalyst. When the amount is less than 0.01 times the molar quantity of the catalyst, the deactivating effect is insufficient and therefore it is undesirable. When the amount is more than 50 times the molar quantity of the catalyst, heat resistance of the resin is reduced and a molded body tends to be easily colored, and therefore it is undesirable.

After the catalyst is deactivated, a process of devolatilizing and removing a low boiling point compound in the polymer under a pressure of 0.1 to 1 mmHg and at a temperature of 200 to 350°C may be carried out. In this process, a horizontal apparatus equipped with a stirring blade having excellent surface renewal ability such as a paddle blade, a lattice blade and a spectacle-shaped blade, or a thin film evaporator is suitably used.

It is desired that the content of foreign materials in the polycarbonate resin is as small as possible, and filtration of a melting raw material, filtration of a catalyst solution, etc. are suitably carried out. The mesh of the filter is preferably 5 μm or less, and more preferably 1 μm or less. Moreover, filtration of the produced resin using a polymer filter is suitably carried out. The mesh of the polymer filter is preferably 100 μm or less, and more preferably 30 μm or less. Further, the process of obtaining a resin pellet should definitely be carried out in a low-dust environment, which is preferably Class 6 or lower, and more preferably Class 5 or lower.

Moreover, to the polycarbonate resin of the present invention, an antioxidant, a catalyst deactivator, a processing stabilizer, a mold release agent, an ultraviolet absorber, a flowability improving agent, a crystal nucleating agent, a toughening agent, a dye, an antistatic agent, an antimicrobial agent or the like may be added according to need. In the present invention, an antioxidant and a catalyst deactivator are preferably contained. In this specification, a product obtained by adding additives like those described above to the polycarbonate resin of the present invention is also called "polycarbonate resin", but to be precise, it is a "polycarbonate resin composition".

Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3, 5-trimethyl-2,4, 6-tris(3, 5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl) isocyanurate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane, and 3,9-bis(2,6-di-tert-butyl-4-methylphenoxy)-2,4,8,10-tetraoxa-3,9-diphosphaspiro[5.5]undecane. Among them, pentaerythritol-tetrakis[3-(3,5-di-tert-butyl-4-hydroxyphenyl)propionate] and 3,9-bis(2,6-di-tert-butyl-4-methylphenoxy)-2,4,8,10-tetraoxa-3,9-diphosphaspiro[5.5]undecane are preferred. The content of the antioxidant in the polycarbonate resin is preferably 0.001 to 0.3 parts by mass, and more preferably 0.01 to 0.2 parts by mass relative to 100 parts by mass of the polycarbonate resin.

As the catalyst deactivator, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used.

From the viewpoint of effects of the catalyst deactivator, stability against the resin, etc., dodecylbenzenesulfonic acid tetrabutylphosphonium salt is particularly preferred. The content of the catalyst deactivator in the polycarbonate resin is preferably 0.0001 to 0.3 parts by mass, more preferably 0.001 to 0.1 parts by mass, and particularly preferably 0.001 to 0.01 parts by mass relative to 100 parts by mass of the polycarbonate resin.

Kneading of the catalyst deactivator may be carried out immediately after the polymerization reaction is completed, or may be carried out after the resin after the polymerization is pelletized. Further, in addition to the catalyst deactivator, other additives may also be added in a similar manner.

Examples of the processing stabilizer include a phosphorus-based processing heat stabilizer and a sulfur-based processing heat stabilizer. Examples of the phosphorus-based processing heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylenebis(4,6-di-tert-butylphenyl) octylphosphite, bis(nonylphenyl) pentaerythritol diphosphite, bis(2,4-dicumylphenyl) pentaerythritol diphosphite, bis(2,4-di-tert-butylphenyl) pentaerythritol diphosphite, distearylpentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-t-butylphenyl)-4,4'-biphenylene diphosphonate, tetrakis(2,4-di-t-butylphenyl)-4,3'-biphenylene diphosphonate, tetrakis(2,4-di-t-butylphenyl)-3,3'-biphenylene diphosphonate, bis(2,4-di-tert-butylphenyl)-4-phenyl-phenylphosphonate, and bis(2,4-di-tert-butylphenyl)-3-phenyl-phenylphosphonate. The content of the phosphorus-based processing heat stabilizer in the polycarbonate resin is preferably 0.001 to 0.3 parts by mass, and more preferably 0.001 to 0.2 parts by mass relative to 100 parts by mass of the polycarbonate resin.

Examples of the sulfur-based processing heat stabilizer include pentaerythritol-tetrakis(3-lauryl thiopropionate), pentaerythritol-tetrakis(3-myristyl thiopropionate), pentaerythritol-tetrakis(3-stearyl thiopropionate), dilauryl-3,3'-thiodipropionate, dimyristyl-3,3'-thiodipropionate, and distearyl-3,3'-thiodipropionate. The content of the sulfur-based processing heat stabilizer in the polycarbonate resin is preferably 0.001 to 0.3 parts by mass, and more preferably 0.001 to 0.2 parts by mass relative to 100 parts by mass of the polycarbonate resin.

Regarding the mold release agent, it is preferred that 90% by mass or more of it is made of an ester of an alcohol and a fatty acid. Specific examples of the ester of an alcohol and a fatty acid include an ester of a monohydric alcohol and a fatty acid and a partial ester or whole ester of a polyhydric alcohol and a fatty acid. As the above-described ester of a monohydric alcohol and a fatty acid, an ester of a monohydric alcohol having 1 to 20 carbon atoms and a saturated fatty acid having 10 to 30 carbon atoms is preferred. Further, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferred.

Specific examples of the ester of a monohydric alcohol and a saturated fatty acid include stearyl stearate, palmityl palmitate, butyl stearate, methyl laurate, and isopropyl palmitate. Specific examples of the partial ester or whole ester of a polyhydric alcohol and a saturated fatty acid include whole esters or partial esters of monoglyceride stearate (glycerin monostearate), monoglyceride stearate, diglyceride stearate, triglyceride stearate, monosorbitate stearate, monoglyceride behenate, monoglyceride caprate, monoglyceride laurate, pentaerythritol monostearate, pentaerythritol tetrastearate, pentaerythritol tetrapelargonate, propylene glycol monostearate, biphenyl biphenate, sorbitan monostearate, 2-ethylhexyl stearate and dipentaerythritols such as dipentaerythritol hexastearate. Among them, monoglyceride stearate and monoglyceride laurate are particularly preferred. The content of these mold release agents is preferably 0.005 to 2.0 parts by mass, more preferably 0.01 to 0.6 parts by mass, and even more preferably 0.02 to 0.5 parts by mass relative to 100 parts by mass of the polycarbonate resin.

The ultraviolet absorber is preferably at least one ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber and a cyanoacrylate-based ultraviolet absorber. That is, ultraviolet absorbers mentioned below may be used solely, or two or more of them may be used in combination.

Examples of the benzotriazole-based ultraviolet absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole.

Examples of the benzophenone-based ultraviolet absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophonone, and 2-hydroxy-4-methoxy-2'-carboxybenzophenone.

Examples of the triazine-based ultraviolet absorber include 2-(4,6-diphenyl-1,3,5-triazin-2-yl)-5-[(hexyl)oxy]-phenol, 2-(4,6-bis(2,4-dimethylphenyl)-1,3,5-triazin-2-yl)-5-[(octyl)oxy]-phenol, and 2,4,6-tris(2-hydroxy-4-hexyloxy-3-methylphenyl)-1,3, 5-triazine.

Examples of the cyclic iminoester-based ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The content of the ultraviolet absorber is preferably 0.01 to 3.0 parts by mass, more preferably 0.02 to 1.0 parts by mass, and even more preferably 0.05 to 0.8 parts by mass relative to 100 parts by mass of the polycarbonate resin. When the content is within these ranges, sufficient weatherability can be imparted to the polycarbonate resin according to intended use.

(Method for Producing Molded Body)

A molded body can be produced using the polycarbonate resin of the present invention. It is molded according to any method, for example, the injection molding method, compression molding method, extrusion molding method, solution casting method or the like. The polycarbonate resin of the present invention is excellent in moldability (good flowability) and heat resistance (high glass transition temperature), and therefore can be advantageously used particularly for optical lenses and optical films which require injection molding.

(Physical Properties of Polycarbonate Resin)

The glass transition temperature (Tg) of the polycarbonate resin of the present invention is preferably 130°C to 160°C, more preferably 135°C to 155°C, and particularly preferably 148°C to 155°C.

The refractive index of the molded body produced from the polycarbonate resin of the present invention is preferably 1.685 to 1.800, more preferably 1.690 to 1.750, and even more preferably 1.695 to 1.720.

The Abbe number of the molded body produced from the polycarbonate resin of the present invention is preferably 14.0 to 18.0, more preferably 14.5 to 17.0, and even more preferably 15.0 to 16.5.

The melt volume-flow rate (MVR) of the polycarbonate resin of the present invention is preferably 30 to 100 $cm^3$/10 min, more preferably 35 to 95 $cm^3$/10 min, and even more preferably 40 to 90 $cm^3$/10 min.

The water absorption rate of the polycarbonate resin of the present invention is preferably less than 0.11%, more preferably 0.10% or less, and even more preferably 0.09% or less.

(Optical Lens)

An optical lens produced by using the polycarbonate resin of the present invention has a high refractive index and excellent heat resistance, and therefore can be used in the field in which expensive glass lenses having a high refractive index have been conventionally used including telescopes, binoculars and television projectors and is very useful. The optical lens is preferably used in the form of an aspherical lens according to need. In the case of the aspherical lens, since the spherical aberration can be adjusted to be substantially zero by one lens, it is not necessary to remove the spherical aberration by combining a plurality of spherical lenses, and reduction in weight and reduction in the production cost can be carried out. Accordingly, the aspherical lens is particularly useful as a camera lens among optical lenses.

Further, the optical lens is molded by any method such as the injection molding method, the compression molding method, and the injection compression molding method. According to the present invention, an aspherical lens having a high refractive index and low birefringence, which is technically difficult to obtain by processing a glass lens, can be more conveniently obtained.

In order to avoid mixing of a foreign material in the optical lens as much as possible, the molding environment must be a low-dust environment, and it is preferably Class 6 or lower, and more preferably Class 5 or lower.

(Optical Film)

An optical film produced by using the polycarbonate resin of the present invention has excellent transparency and heat resistance, and therefore is suitably used for a film for liquid crystal substrates, an optical memory card, etc.
In order to avoid mixing of a foreign material in the optical film as much as possible, the molding environment must be a low-dust environment, and it is preferably Class 6 or lower, and more preferably Class 5 or lower.

EXAMPLES

Hereinafter, the present invention will be specifically described by way of examples, but the present invention is not limited thereto. Note that measurement values in the Examples were measured using the below-described methods and apparatuses.
1) Glass transition temperature (Tg): The glass transition temperature (Tg) was measured using a differential scanning calorimeter (DSC). The specified conditions are as described below.

Apparatus: DSC7000X manufactured by Hitachi High-Tech Science Corporation
Amount of sample: 5 mg
Atmosphere: under nitrogen gas atmosphere
Temperature raising condition: 10°C/min

2) Refractive index (nD): The refractive index of a film having a thickness of 0.1 mm made of the polycarbonate resin produced in the Examples described below was measured according to the method of JIS-K-7142 using an Abbe's refractometer.
3) Abbe number (vd): Refractive indexes of a film having a thickness of 0.1 mm made of the polycarbonate resin produced in the Examples described below were measured at 23°C and at wavelengths of 486 nm, 589 nm and 656 nm according to the method of JIS-K-7142 using an Abbe's refractometer, and the Abbe number was calculated using the below-described formula:

$$\nu d=(nD-1)/(nF-nC)$$

nD: refractive index at a wavelength of 589 nm
nC: refractive index at a wavelength of 656 nm
nF: refractive index at a wavelength of 486 nm

4) Weight-average molecular weight (Mw)

The weight-average molecular weight of resin was measured according to the gel permeation chromatography (GPC) method and calculated based on standard polystyrene conversion. The apparatuses and columns used and measurement conditions are as described below.

GPC apparatus: HLC-8420GPC manufactured by Tosoh Corporation
Columns:

TSKgel SuperHM-M × 3, manufactured by Tosoh Corporation
TSKgel guardcolumn SuperH-H × 1, manufactured by Tosoh Corporation
TSKgel SuperH-RC × 1, manufactured by Tosoh Corporation
Detector: RI detector
Standard polystyrene: standard polystyrene kit PStQuick C manufactured by Tosoh Corporation
Sample solution: 0.2% by mass solution of tetrahydrofuran
Eluent: tetrahydrofuran
Flow rate of eluent: 0.6 mL/min
Column temperature: 40°C

5) Melt volume-flow rate: MVR ($cm^3$/10 min)

The measurement was carried out at 260°C with a load of 2.16 kg in accordance with ISO1133. Measurement apparatus: Melt Indexer T-111 (manufactured by Toyo Seiki Seisaku-sho, Ltd.)

6) Water absorption rate (%)

The measurement was carried out according to the method of JIS K7209. Specifically, a test piece having a diameter of 50 mm and a thickness of 3 mm obtained by injection molding was dried at 50°C for 24 hours using a hot air dryer. After that, the mass of the test piece was measured and defined as M0. Next, the test piece was immersed in water whose temperature was controlled to 23°C±2°C (21°C to 25°C). After 24 hours, the test piece was taken out, and water adhering to the surface was wiped off. Then the mass was measured and defined as Mt. The water absorption rate (%) was calculated according to the formula below.

$$\text{Water absorption rate (\%)}=(Mt-M0)/M0\times100$$

Note that the mass measurement was carried out in an environment in which the temperature was controlled to 23°C±2°C (21°C to 25°C).

(Example 1)

As raw materials, 5342.4 g (8.52 mol) of 2DNBINOL-2EO (molecular weight: 626.8) represented by a structural formula below, 4629.2 g (8.79 mol) of DPBHBNA (molecular weight: 526.6) represented by a structural formula below, 3300.0 g (6.13 mol) of BNEF (molecular weight: 538.6) represented by a structural formula below, and 646.8 g (3.20 mol) of 1,12-dodecanediol (molecular weight: 202.3) were put into a 50 L reactor equipped with a stirrer and a distillation apparatus, and subsequently 5877.4 g (27.4 mol) of diphenyl carbonate (DPC) and $2.24\times10^{-2}$ g ($2.66\times10^{-4}$ mol) of sodium hydrogen carbonate were added thereto. After that, substitution with nitrogen in the reaction system was carried out, and the mixture was heated to 180°C over 30 minutes under nitrogen atmosphere (760 Torr) and stirred.

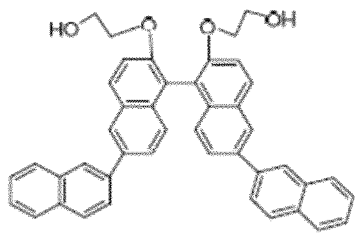

2DNBINOL-2EO

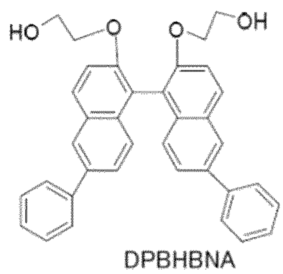

DPBHBNA

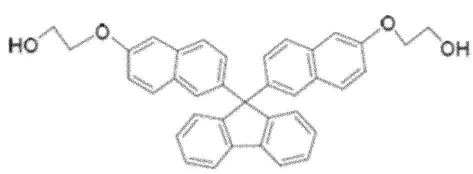

BNEF

After the raw materials were completely dissolved, the temperature was increased to 190°C over 20 minutes and then the pressure reducing degree was adjusted to 200 Torr. Conditions were kept at 190°C and 200 Torr for 20 minutes to perform a transesterification reaction. Further, the temperature was increased to 220°C at a rate of 30°C/hr, and the pressure reducing degree was adjusted to 150 Torr. After that, the temperature was increased to 240°C at a rate of 60°C/hr, and the pressure reducing degree was adjusted to 100 Torr. Further, the pressure reducing degree was adjusted to 1 Torr or less over 40 minutes, and stirring was performed under conditions of 240°C and 1 Torr for 30 minutes to perform a polymerization reaction. After the reaction was completed, nitrogen was introduced into the reactor to increase the pressure, and a polycarbonate resin produced was taken out therefrom while being pelletized by a pelletizer.

The obtained pellet of the polycarbonate resin was dried at 100°C for 3 hours, and pentaerythritol-tetrakis[3-(3,5-di-tert-butyl-4-hydroxyphenyl)propionate] (ADK STAB AO-60 manufactured by ADEKA Corporation) (1000 ppm relative to the polycarbonate resin); 3,9-bis(2,6-di-tert-butyl-4-methylphenoxy)-2,4,8,10-tetraoxa-3,9-diphosphaspiro[5.5]undecane (ADK STAB PEP-36 manufactured by ADEKA Corporation) (300 ppm relative to the polycarbonate resin); dodecylbenzenesulfonic acid tetrabutylphosphonium salt (MGA-614 manufactured by TAKEMOTO OIL & FAT CO., LTD.) (15 ppm relative to the polycarbonate resin); and glycerin monostearate (monoglyceride stearate, S-100 manufactured by Riken Vitamin Co., Ltd.) (1500 ppm relative to the polycarbonate resin) were added thereto, and the mixture was kneaded by a twin screw extruder. Details regarding extrusion are as described below. Physical properties of the obtained polycarbonate resin are shown in Table 1.

Twin screw extruder: TEM-18SS manufactured by SHIBAURAMACHINE CO., LTD.
Resin temperature: 260°C
Screw rotation speed: 200 rpm

(Example 2)

A polycarbonate resin was obtained in a manner similar to that in Example 1, except that 663.1 g (1.06 mol) of 2DNBINOL-2EO, 6017.7 g (11.4 mol) of DPBHBNA, 3500.0 g (5.92 mol) of BPPEF (molecular weight: 590.7) represented by a structural formula below, 556.6 g (2.75 mol) of 1,12-dodecanediol, and 4669.1 g (21.8 mol) of DPC were used as raw materials. Physical properties of the obtained polycarbonate resin are shown in Table 1.

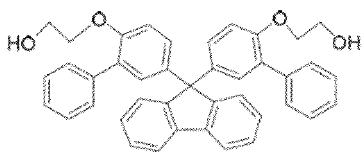

BPPEF

(Comparative Example 1)

A polycarbonate resin was obtained in a manner similar to that in Example 1, except that 5000.0 g (13.4 mol) of BNE (molecular weight: 374.4) represented by a structural formula below, 2344.1 g (4.45 mol) of DPBHBNA, 6393.4 g (11.9 mol) of BNEF, and 6547.5 g (30.6 mol) of DPC were used as raw materials. Physical properties of the obtained polycarbonate resin are shown in Table 1.

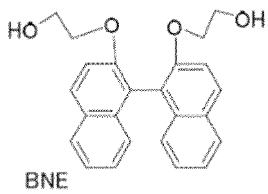

BNE

Table 1

| | Aromatic dihydroxy compound | | | | | | | | Alkylene glycol | | Physical properties | | | | |
|---|---|---|---|---|---|---|---|---|---|---|---|---|---|---|---|
| | Structural unit (a)/mol% | | Structural unit (b) /mol% | | Structural unit (c-1)/mol% | | Structural unit (c-2) /mol% | | Structural unit (d)/mol% | | nD | vd | Tg (°C) | MVR ($cm^3$/10 min) | Water absorption rate (%, 24hr) |
| Example 1 | 2DNBINOL-2EO | 32 | DPBHBNA | 33 | BNEF | 23 | - | - | 1,12-dodecanediol | 12 | 1.702 | 15.4 | 151 | 45 | 009 |
| Example 2 | 2DNBINOL-2EO | 5 | DPBHBNA | 54 | - | - | BPPEF | 28 | 1,12-dodecanediol | 13 | 1.702 | 152 | 138 | 90 | 0.08 |
| Comparative Example 1 | BNE | 45 | DPBHBNA | 15 | BNEF | 40 | - | - | - | - | 1.681 | 181 | 147 | 40 | 0.11 |

## Claims

1. A polycarbonate resin comprising: a structural unit (a) represented by general formula (1-1A); a structural unit (b) represented by general formula (1-1A), but different from the structural unit (a); a structural unit (c-1) represented by general formula (1-2A) or a structural unit (c-2) represented by general formula (3-1); and a structural unit (d) represented by general formula (2),

wherein the content of the structural unit (a) is 1 to 50 mol%, the content of the structural unit (b) is 1 to 70 mol%, the content of the structural unit (c-1) or (c-2) is 1 to 50 mol%, and the content of the structural unit (d) is 1 to 30 mol%, in each case with reference to the total amount of the structural units (a) to (d):

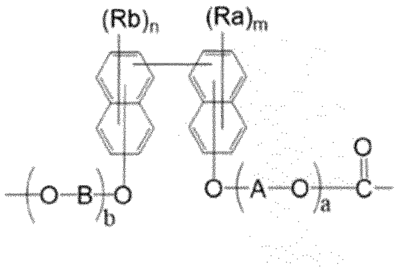

(1−1A)

wherein in formula (1-1A):
$R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10,

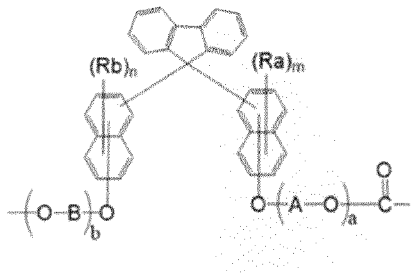

(1−2A)

wherein in formula (1-2A):
$R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10,

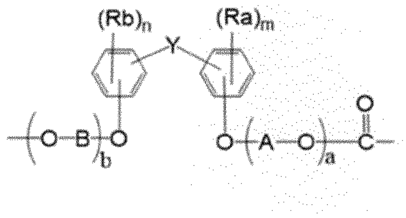

(3-1)

wherein in formula (3-1):
$R_a$ and $R_b$ are each independently selected from hydrogen, a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, and an aryl group having 6 to 20 carbon atoms;
Y represents a fluorene group;
A and B each independently represent an alkylene group having 1 to 4 carbon atoms;
m and n each independently represent an integer of 0 to 4; and
a and b each independently represent an integer of 1 to 10,

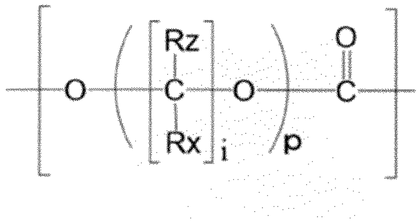

(2)

wherein in formula (2): $R_z$ and $R_x$ each independently represent a hydrogen atom or an alkyl group having 1 to 3 carbon atoms; i represents an integer of 2 to 16; and p represents an integer of 1 to 600.

2. The polycarbonate resin according to claim 1, wherein the structural unit (a) is a structural unit derived from 2DNBINOL-2EO (6,6'-di-(2-naphthyl)-2,2'-bis-(2-hydroxyethoxy)-1,1'-binaphthyl) represented by a structural formula below; the structural unit (b) is a structural unit derived from DPBHBNA (6,6'-diphenyl-2,2'-bis-(2-hydroxyethoxy)-1,1'-binaphthyl) represented by a structural formula below; the structural unit (c-1) is a structural unit derived from BNEF (9,9-bis[6-(2-hydroxyethoxy)-2-naphthyl]fluorene) represented by a structural formula below; the structural unit (c-2) is a structural unit derived from BPPEF (9,9-bis[4-(2-hydroxyethoxy)-3-phenylphenyl]fluorene) represented by a structural formula below; and the structural unit (d) is a structural unit derived from a compound selected from the group consisting of diethylene glycol, 1,5-pentanediol, 1,6-hexanediol, 1,7-heptanediol, 1,8-octanediol, 1,10-decanediol, and 1,12-dodecanediol:

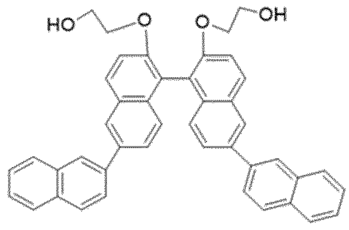

2DNBINOL-2EO

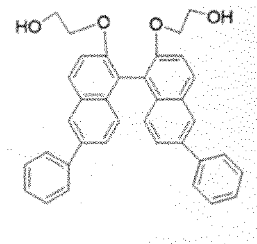

DPBHBNA

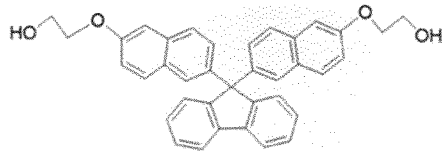

BNEF

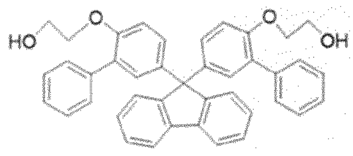

BPPEF

3. The polycarbonate resin according to claim 1 or 2, which comprises an antioxidant and a catalyst deactivator.

4. The polycarbonate resin according to claim 3, wherein the antioxidant is pentaerythritol-tetrakis[3-(3,5-di-tert-butyl-4-hydroxyphenyl)propionate] and 3,9-bis(2,6-di-tert-butyl-4-methylphenoxy)-2,4,8,10-tetraoxa-3,9-diphosphaspiro[5.5]undecane; and the catalyst deactivator is dodecylbenzenesulfonic acid tetrabutylphosphonium salt.

5. The polycarbonate resin according to any one of claims 1 to 4, which has a refractive index (nD) of 1.685 to 1.800.

6. The polycarbonate resin according to any one of claims 1 to 5, which has an Abbe number (ν) of 14.0 to 18.0.

7. The polycarbonate resin according to any one of claims 1 to 6, which has a glass transition temperature of 130 to 160°C.

8. The polycarbonate resin according to any one of claims 1 to 7, which has a melt volume-flow rate (MVR) of 30 to 100 $cm^3$/10 min.

9. The polycarbonate resin according to any one of claims 1 to 8, which has a water absorption rate of less than 0.11%.

10. An optical lens comprising the polycarbonate resin according to any one of claims 1 to 9.

11. An optical film comprising the polycarbonate resin according to any one of claims 1 to 9.

**INTERNATIONAL SEARCH REPORT**

International application No.
**PCT/JP2022/041831**

**A. CLASSIFICATION OF SUBJECT MATTER**

***C08G 64/02***(2006.01)i; ***C08L 69/00***(2006.01)i; ***G02B 1/04***(2006.01)i
FI: C08G64/02; C08L69/00; G02B1/04

According to International Patent Classification (IPC) or to both national classification and IPC

**B. FIELDS SEARCHED**

Minimum documentation searched (classification system followed by classification symbols)

C08G64/00-64/42; C08L69/00; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/175663 A1 (MITSUBISHI GAS CHEMICAL CO., INC.) 03 September 2020 (2020-09-03) claims, paragraphs [0052], [0152], [0156], [0259], examples | 1-11 |
| Y | JP 2015-007188 A (MITSUBISHI CHEMICAL CORP.) 15 January 2015 (2015-01-15) claims, paragraphs [0026], [0031], [0155], examples | 1-11 |
| Y | JP 2013-209555 A (MITSUBISHI CHEMICAL CORP.) 10 October 2013 (2013-10-10) claims, paragraphs [0002], [0034], [0044], examples | 1-11 |
| Y | WO 2019/044214 A1 (TEIJIN LTD.) 07 March 2019 (2019-03-07) claims, paragraph [0055] | 9 |
| Y | JP 2018-177887 A (TEIJIN LTD.) 15 November 2018 (2018-11-15) claims, paragraph [0027] | 9 |
| A | WO 2019/044875 A1 (MITSUBISHI GAS CHEMICAL CO., INC.) 07 March 2019 (2019-03-07) entire text | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/041831**

**C. DOCUMENTS CONSIDERED TO BE RELEVANT**

| Category* | Citation of document, with indication, where appropriate, of the relevant passages | Relevant to claim No. |
|---|---|---|
| A | JP 2018-104691 A (OSAKA GAS CHEMICALS CO., LTD.) 05 July 2018 (2018-07-05) entire text | 1-11 |
| P, A | WO 2021/230085 A1 (MITSUBISHI GAS CHEMICAL CO., INC.) 18 November 2021 (2021-11-18) entire text | 1-11 |

Form PCT/ISA/210 (second sheet) (January 2015)

**INTERNATIONAL SEARCH REPORT**
**Information on patent family members**

International application No.
**PCT/JP2022/041831**

| Patent document cited in search report | Publication date (day/month/year) | Patent family member(s) | Publication date (day/month/year) |
|---|---|---|---|
| WO 2020/175663 A1 | 03 September 2020 | US 2022/0145004 A1<br>claims, paragraphs [0187], [0327], [0331], [0504], examples<br>US 2022/0243008 A1<br>EP 3933457 A1<br>CN 113518934 A<br>KR 10-2021-0132134 A<br>TW 202100611 A | |
| JP 2015-007188 A | 15 January 2015 | (Family: none) | |
| JP 2013-209555 A | 10 October 2013 | (Family: none) | |
| WO 2019/044214 A1 | 07 March 2019 | US 2021/0147621 A1<br>claims, paragraph [0076]<br>US 2022/0146713 A1<br>EP 3677614 A1<br>EP 3933456 A1<br>TW 201920352 A<br>KR 10-2019-0140074 A<br>CN 110741030 A<br>KR 10-2021-0097779 A<br>CN 113474685 A<br>TW 202045582 A | |
| JP 2018-177887 A | 15 November 2018 | (Family: none) | |
| WO 2019/044875 A1 | 07 March 2019 | US 2020/0181325 A1<br>entire text<br>EP 3677615 A1<br>KR 10-2020-0041975 A<br>CN 111094389 A<br>CN 114716658 A<br>CN 114752053 A<br>TW 201920353 A | |
| JP 2018-104691 A | 05 July 2018 | (Family: none) | |
| WO 2021/230085 A1 | 18 November 2021 | TW 202200670 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007142149 A
- JP H625398 A
- JP 2010132782 A
- JP 2000302857 A
- JP 2000302858 A
- JP 2015166951 W